# EUROPEAN PATENT SPECIFICATION

(11) **EP 1 931 129 B1**
(45) Date of publication and mention of the grant of the patent: **08.05.2013**
(21) Application number: 07005257.6
(22) Date of filing: 14.03.2007
(51) Int. Cl.: H04N 21/433, H04N 21/432, H04N 21/61, H04N 21/426

(54) **Method for playback of broadcast data in receiver**
Verfahren zur Wiedergabe von Rundfunkdaten für einen Empfänger
Procédé pour la lecture de données de diffusion dans un récepteur

(30) Priority: 30.10.2006 KR 20060105957
(43) Date of publication of application: 11.06.2008
(73) Proprietor: LG Electronics Inc., Seoul 150-721 (KR)
(72) Inventor: Lee, Seungjun, Seoul (KR)
(74) Representative: Katérle, Axel

(56) References cited:
- EP-B- 1 208 696
- US-A1- 2003 233 666
- US-A1- 2005 201 720

## Description

### FIELD OF THE INVENTION

The present invention relates to a method for playback of broadcast data in a receiver.

### BACKGROUND OF THE INVENTION

Currently, a broadcast terminal can play data received from one broadcast channel. Alternatively, the broadcast terminal can store the received broadcast data in a memory and, thereafter, play back the data at a later time. However, a conventional broadcast terminal is unable to simultaneously receive broadcast data from two or more broadcast channels for playing or storing.

### PRIOR ART

European Patent Specification EP 1 208 696 discloses a Hard Disk Recorder (HDR) system having a receiver in conjunction with a hard disk. The HDR may be used to record television programs for later playback by a user.

United States Patent Application 10/449,501 discloses that broadcast signals may be saved to a hard drive for subsequent playback.

### SUMMARY OF THE INVENTION

The present invention is directed to a method for playback of broadcast data in a receiver.

Additional features and advantages of the invention will be set forth in the description which follows, and in part will be apparent from the description, or may be learned by practice of the invention. The objectives and other advantages of the invention will be realized and attained by the structure particularly pointed out in the written description and claims hereof as well as the appended drawings.

To achieve these and other advantages and in accordance with the purpose of the present invention, as embodied and broadly described, the present invention is embodied in a method for playback of broadcast data in a receiver, the method comprising receiving first data through a first broadcast channel in the receiver, performing playback of the first data, receiving second data through a second broadcast channel in the receiver, storing a segment of the received second data if the second data is received during playback of the first data, performing playback of the stored segment after playback of at least part of the first data, and performing playback of the received second data after playback of the stored segment, wherein a playback speed of the stored segment is different from a playback speed of the received second data.

Preferably, the segment is stored until a playback length of the stored segment matches a continuous playback length of the received second data. Preferably, the segment comprises a first portion of the second data received during playback of the first data, and a second portion of the second data received after playback of the first data ends and before playback of the received second data begins.

Preferably, the receiver is a mobile terminal. In one aspect of the invention, playback of the stored segment is performed after playback of the first data has ended. Alternatively, playback of the stored segment is performed automatically. Preferably, the playback speed of the stored segment is faster than the playback speed of the received second data.

In another aspect of the invention, the method further comprises setting a reservation to receive the second data, and storing the received second data if playback of the first data occurs during the reservation. In a further aspect of the invention, the method further comprises setting a first reservation to receive the first data, receiving and performing playback of the first data upon the reservation, setting a second reservation to receive the second data, and storing the received second data if playback of the first data occurs during the second reservation.

In accordance with another embodiment of the present invention, a mobile terminal for playback of broadcast data comprises a receiver for receiving first data through a first broadcast channel and receiving second data through a second broadcast channel, and a controller for performing playback of the first data, storing a segment of the received second data if the second data is received during playback of the first data, performing playback of the stored segment after playback of at least part of the first data, and performing playback of the received second data after playback of the stored segment, wherein a playback speed of the stored segment is different from a playback speed of the received second data.

Preferably, the segment is stored until a playback length of the stored segment matches a continuous playback length of the received second data. Preferably, the segment comprises a first portion of the second data received during playback of the first data, and a second portion of the second data received after playback of the first data ends and before playback of the received second data begins.

Preferably, playback of the stored segment is performed after playback of the first data has ended. Alternatively, playback of the stored segment is performed automatically. Preferably, the playback speed of the stored segment is faster than the playback speed of the received second data.

In one aspect of the invention, the controller sets a reservation to receive the second data and stores the received second data if playback of the first data occurs during the reservation. In another aspect of the invention, the controller sets a first reservation to receive the first data, the receiver receives the first data upon the reservation, and the controller performs playback of the first data upon the reservation, sets a second reservation to receive the second data, and stores the received second data if playback of the first data occurs during the second reservation. Preferably, the receiver comprises at least one of a multiple-tuner and a plurality of single-tuners.

In accordance with another embodiment of the present invention, a method for playback of broadcast data in a receiver comprises receiving first data through a first broadcast channel in the receiver, performing playback of the first data, setting a reservation for receiving second data through a second broadcast channel in the receiver, determining whether a playback time duration of the first data overlaps with the reservation, storing received second data from the beginning of the reservation if the playback time duration of the first data overlaps with the reservation, and performing playback of the stored second data after playback of at least part of the first data.

Preferably, the receiver is a mobile terminal. Preferably, a playback speed of the stored second data is different from an original playback speed of the second data. Preferably, the received second data is stored until a playback length of the stored second data matches a continuous playback length of the received second data.

In one aspect of the invention, the method further comprises performing playback of the received second data after playback of the stored second data. Preferably, playback of the stored second data is performed upon a user command. Preferably, playback of the stored second data is performed when playback of the first data ends. Alternatively, playback of the stored second data is performed automatically. Preferably, playback of the stored second data is performed from the beginning of the stored second data.

In another aspect of the invention, the method further comprises setting a reservation to receive the first data, and receiving and performing playback of the first data upon the reservation. The method may also comprise deleting the stored second data after playback of the stored second data has ended, providing notice of the received second data being stored receiving an electronic programming guide (EPG), and storing the received second data periodically.

In accordance with another embodiment of the present invention, a mobile terminal for playback of broadcast data comprises a receiver for receiving first data through a first broadcast channel and receiving second broadcast data through second broadcast channel, and a controller for performing playback of the first data, setting a reservation for receiving second data through a second broadcast channel, determining whether a playback time duration of the first data overlaps with the reservation, storing received second data from the beginning of the reservation if the playback time duration of the first data overlaps with the reservation, and performing playback of the stored second data after playback of at least part of the first data.

Preferably, a playback speed of the stored second data is different from an original playback speed of the second data. Preferably, the received second data is stored until a playback length of the stored second data matches a continuous playback length of the received second data.

In one aspect of the invention, the controller performs playback of the received second data after playback of the stored second data. Preferably, playback of the stored second data is performed upon a user command. Preferably, playback of the stored second data is performed when playback of the first data ends. Alternatively, playback of the stored second data is performed automatically. Preferably, playback of the stored second data is performed from the beginning of the stored second data.

In another aspect of the invention, the controller sets a reservation to receive the first data, the receiver receives the first data upon the reservation, and the controller performs playback of the first data upon the reservation. Preferably, the controller may delete the stored second data after playback of the stored second data has ended, provide notice of the received second data being stored, receive an electronic programming guide (EPG), and store the received second data periodically. Preferably, the receiver comprises at least one of a multiple-tuner and a plurality of single-tuners.

In accordance with another embodiment of the present invention, a method for playback of broadcast data in a receiver comprises receiving first data through a first broadcast channel in the receiver, performing playback of the first data, setting at least one reservation for receiving at least one additional data respectively through at least one additional broadcast channel, determining whether a playback time duration of the first data overlaps with the at least one reservation, storing the at least one received additional data from the beginning of its respective reservation if the playback time duration of the first data overlaps with the at least one reservation, and performing playback of the stored at least one additional data after playback of at least part of the first data.

Preferably, the receiver is a mobile terminal. Preferably, the method further comprises storing the at least one received additional data from the beginning of its respective reservation if a playback time duration of a previously received at least one additional data overlaps with the respective reservation, and performing playback of the stored at least one additional data after playback of at least part of the previously received at least one additional data.

In accordance with another embodiment of the present invention, a mobile terminal for playback of broadcast data comprises a receiver for receiving first data through a first broadcast channel and receiving at least one additional data respectively through at least one additional broadcast channel, and a controller for performing playback of the first data, setting at least one reservation for receiving at least one additional data respectively through at least one additional broadcast channel, determining whether a playback time duration of the first data overlaps with the at least one reservation, storing the at least one received additional data from the beginning of its respective reservation if the playback time duration of the first data overlaps with the at least one reservation, and performing playback of the stored at least one additional data after playback of at least part of the first data.

Preferably, the controller stores the at least one received additional data from the beginning of its respective reservation if a playback time duration of a previously received at least one additional data overlaps with the respective reservation, and performs playback of the stored at least one additional data after playback of at least part of the previously received at least one additional data. Preferably, the receiver comprises at least one of a multiple-tuner and a plurality of single-tuners.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention. Features, elements, and aspects of the invention that are referenced by the same numerals in different figures represent the same, equivalent, or similar features, elements, or aspects in accordance with one or more embodiments.

Fig. 1 is a schematic block diagram of a broadcast terminal in accordance with one embodiment of the present invention.

Fig. 2a is a block diagram for illustrating a flow of a broadcast signal in a broadcast terminal in accordance with one embodiment of the present invention.

Fig. 2b is a block diagram for illustrating a flow of a broadcast signal in a broadcast terminal in accordance with another embodiment of the present invention.

Fig. 3 illustrates a time relationship between the reception, storage and playback of broadcast data received by a broadcast terminal through two broadcast channels in accordance with one embodiment of the present invention.

Fig. 4 illustrates a time relationship between the reception, storage and playback of broadcast data received by a broadcast terminal through two broadcast channels in accordance with one embodiment of the present invention, wherein a specific program of a second broadcast channel is reserved.

Fig. 5 illustrates a time relationship between the reception, storage and playback of broadcast data received by a broadcast terminal through two broadcast channels in accordance with one embodiment of the present invention, wherein specific programs of a first and second broadcast channel are respectively reserved.

Fig. 6 illustrates a time relationship between the reception, storage, and playback of broadcast data received by broadcast terminal through three broadcast channels in accordance with another embodiment of the present invention, wherein specific programs of the three broadcast channels are reserved, respectively.

Figs. 7a to 7e illustrate display screens in which broadcast data of a first broadcast channel and a second broadcast channel are played back in accordance with one embodiment of the present invention.

Figs. 8a and 8b illustrate display screens which indicate the storage of second broadcast channel data during playback of first broadcast channel data in accordance with one embodiment of the present invention.

Fig. 9 is a flowchart of a broadcast data playback method of a broadcast terminal in accordance with one embodiment of the present invention.

Fig. 10 is a flowchart of a broadcast data playback method of a broadcast terminal in accordance with another embodiment of the present invention.

Fig. 11 is a flowchart of a broadcast data playback method of a broadcast terminal in accordance with a further embodiment of the present invention.

Fig. 12 is a flowchart of a broadcast data playback method of a broadcast terminal in accordance with another embodiment of the present invention.

### DETAILED DESCRIPTION OF THE PREFERRED EMBODIMENTS

The present invention relates to a method for playback of broadcast data in a receiver. Embodiments of the invention will be described in a more detailed manner with reference to the drawings.

In accordance with the present invention, examples of broadcast standards applicable to the present invention include Digital Audio Broadcasting (DAB), Digital Video Broadcasting-Handheld (DVB-H) of Europe based on Eureka-147, Media Forward Link Only (FLO) of the United States of America, Digital Multimedia Broadcasting (DMB) of Korea, Integrated Service Digital Broadcasting-Terrestrial (ISDB-T). DMB of Korea may be classified as Terrestrial-Digital Multimedia Broadcasting (T-DMB) based on Eureka-147 and Satellite-Digital Multimedia Broadcasting (S-DMB) using satellite communication.

Notably, other types of broadcasting standards may be applicable to the present invention. For example, the present invention is also applicable to 8-VSB, which is an American-style digital television standard, ATSC of the United States of America, and a fixed type broadcasting standard such as Digital Broadcasting-Terrestrial (DVB-T) of Europe.

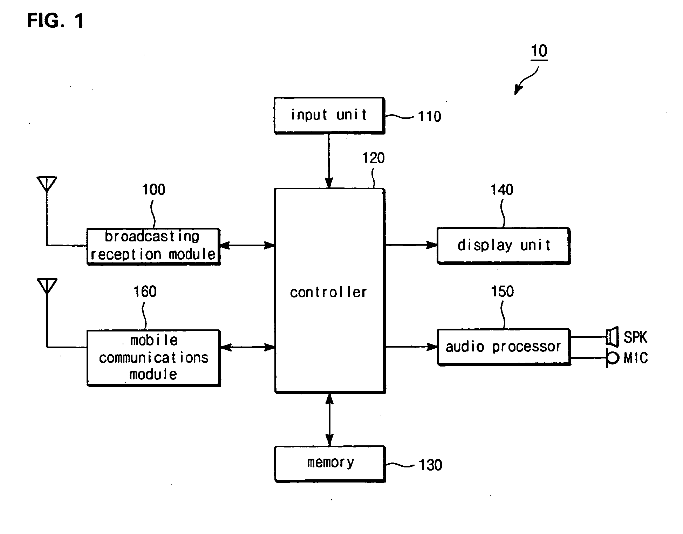

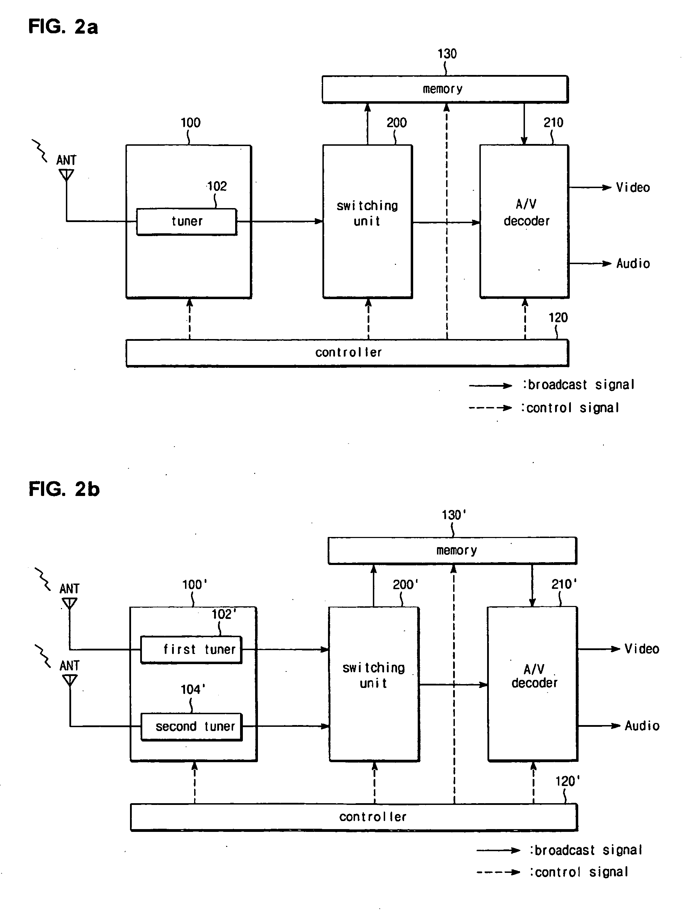

Fig. 1 is a schematic block diagram of a broadcast terminal in accordance with one embodiment of the present invention. Fig. 2a is a block diagram illustrating a flow of a broadcast signal in a broadcast terminal in accordance with one embodiment of the present invention.

Referring to Figs. 1 and 2a, the broadcast terminal 10 according to one embodiment of the present invention comprises a broadcasting reception module 100, an input unit 110, a controller 120, a memory 130, a display unit 140, an audio processor 150, a mobile communications module 160, a switching unit 200 and an audio/video (AN) decoder 210. The broadcasting reception module 100 is a wireless telecommunications apparatus for receiving a broadcast signal from a broadcast network. Preferably, the broadcasting reception module 100 receives a broadcast signal broadcasted from a broadcasting center according to various types of digital broadcasting standards, and transmits the received broadcast signal to the controller 120 or other apparatus. Notably, the broadcasting reception module 100 may store the received broadcast signal in a buffer prior to transmitting the signal to the controller or other apparatus. In this way, the broadcast terminal 10 including the broadcasting reception module 100 can playback various broadcast contents or broadcast data provided from the broadcasting center. Preferably, the broadcast contents or data is played back as a voice, image or character through the display unit 140 or a speaker SPK.

In one aspect of the invention, the broadcasting reception module 100 includes one tuner 102 and receives broadcast data from at least two broadcast channels. Therefore, the broadcasting reception module 100 may receive two broadcast signals of two channels using the one tuner 102.

The input unit 110 is an interface communicating with a peripheral or a user. The input unit 110 can be a keypad in which a plurality of key buttons are formed, a navigation key in which various direction keys are formed, a jog device in which an input is selected according to a rotation quantity of the jog device, an audio input unit in which a voice recognition unit is utilized, a touch input device such as a touch pad or touch screen, and a wireless remote-controller, for example. Preferably, information or a command related to various information, such as information related to a broadcasting reception, reservation or playback is inputted to the broadcast terminal 10 through the input unit 110 from a peripheral or a user.

The memory 130 may store the program for processing and control of the broadcast terminal 10, especially, the controller 120. The memory 130 may also store reference data and various types of renewable data for storage. The memory 130 permanently stores data in case a delete request is not provided. In addition, the memory 130 may include an embedded or exterior storage medium, or a storage unit for temporarily storing data such as a buffer.

The memory 130 provides a memory space for storing programs necessary for broadcast reception, reservation, and playback. The memory also stores inputted data, outputted data, and processing data by using various data structures under the control of the controller 120.

Furthermore, the memory 130 store various broadcast data which are received from at least two broadcast channels through the broadcasting reception module 100 under the control of the controller 120. The broadcast data stored in the memory 130 can be deleted under the control of the controller 120 at a specified point in time, such as after a broadcast playback, for example.

Under the control of the controller 120, the display unit 140 displays various processes, control actions and images of the broadcast terminal 10. The display unit 140 provides various information or a command input related to the broadcast reception, reservation, and playback through a screen. Thus, a user can recognize the progress of various processes through the display unit 140. The user may also recognize control of the broadcast terminal 10 via the various information or command inputs displayed on the display unit 140.

The audio processor 150 processes voice signals inputted into a microphone MIC and outputted through a speaker SPK. Preferably, the audio processor 150 converts various processes of the broadcast terminal 10 into a voice signal and outputs the signal through the speaker SPK. Alternatively, the audio processor 150 may process various information or commands inputted through the microphone MIC via a voice signal. For example, various information or a command related to a broadcast reception, reservation, and playback of the broadcast terminal 10 may be inputted through the microphone MIC. The audio processor 150 can then deliver the inputted information to the controller 120 by using a voice input unit having a voice recognition unit, for example.

The mobile communications module 160 is a wireless telecommunications device for transmitting and receiving voice or data signals with a mobile communications network. Preferably, the broadcast terminal 10 including the mobile communications module 160 performs various communications, such as voice communications, message transfer, web page access, data transmission and reception, telephone connection, and instant messaging.

Preferably, the broadcast terminal 10 may be implemented with various forms. For example, the broadcast terminal 10 may be a dedicated broadcast terminal receiving only a digital broadcasting signal, a broadcast terminal combined with the mobile communications module 160 described above, a digital broadcast terminal combined with a navigation function, and a terminal having a display device capable of regenerating a broadcast signal.

Referring to Fig. 2b, in another aspect of the present invention, a broadcast signal is received through a first tuner 102 and a second tuner 104. According to a control signal delivered from the controller 120, the switching unit 200 delivers the broadcast signal received through the first tuner 102 and the second tuner 104 to one of the memory 130 and the AN decoder 210.

The A/V decoder 210 decodes the broadcast signal delivered from the switching unit 200 and outputs the decoded signal through the display unit 140 and/or the speaker SPK. The AN decoder 210 may be integrated with the audio processor 150 described above or separately equipped. Moreover, the switching unit 200 and the AN decoder 210 may be implemented with hardware or software. Also, the switching unit 200 and the AN decoder 210 may be implemented with a dedicated processor or dedicated chip and integrated within the controller 120.

The controller 120 controls elements described above as well as the overall operation of the broadcast terminal 10. Accordingly, the operation of the broadcast terminal 10 according to one embodiment of the present invention will be described in detail with regard to the controller 120.

Preferably, the first tuner 102 receives first broadcast data from a first broadcast channel while the second tuner 104 receives second broadcast data from a second broadcast channel. Preferably, the first broadcast channel and the second broadcast channel have the same broadcasting standard and may be channels that broadcast different multimedia contents. The channels may be one of a video channel, an audio channel, and a data channel. For example, both the first broadcast channel and the second broadcast channel may be channels broadcasted under a terrestrial digital multimedia broadcasting (T-DMB) system, wherein the first broadcast channel is the video channel and the second broadcast channel is the audio channel.

Alternatively, the first broadcast channel and the second broadcast channel may be channels having different broadcasting standards. For example, the first broadcast channel may be a channel broadcasted under the T-DMB system while the second broadcast channel may be a channel broadcasted under a satellite digital multimedia broadcasting (S-DMB) system.

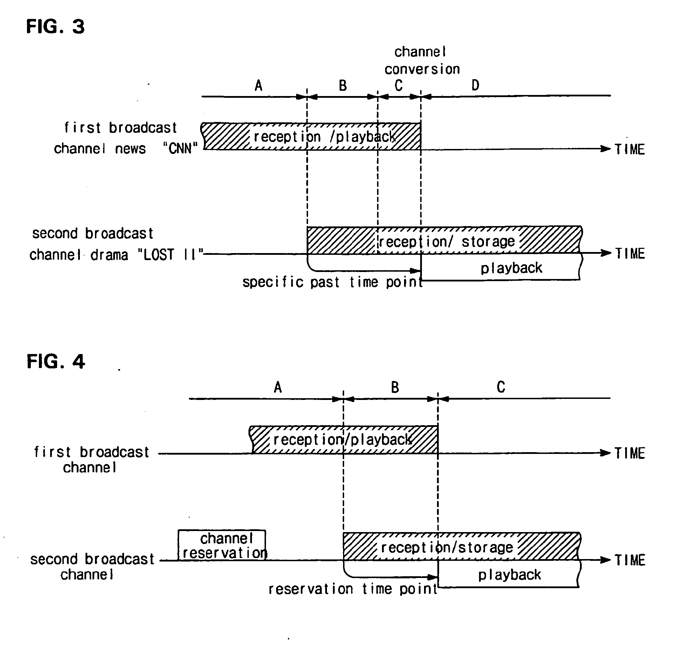

Fig. 3 illustrates a time relationship between a reception, storage, and playback of broadcast data received through two broadcast channels by a broadcast terminal in accordance with one embodiment of the present invention. Referring to Figs. 1, 2a, 2b and 3, first broadcast data is received through the broadcasting reception module 100 and played (periods A, B and C of Fig. 3). During playback of the first broadcast data, additional broadcast data may be received through at least one other broadcast channel. For example, second broadcast data may be received through a second broadcast channel. However, the second broadcast data cannot be played while the first broadcast data is played. Accordingly, during playback of the first broadcast data, the controller 120 controls the broadcast terminal to store the second broadcast data received through the second broadcast channel in the memory 130 (periods B and C of Fig. 3).

In accordance with the present invention, when a first broadcast channel is selected according to a command signal inputted through the input unit 110, the controller 120 controls the switching unit 200 to deliver first broadcast data received through the first tuner part 102 to the A/V decoder 210. The AN decoder 210 then decodes the first broadcast data delivered from the switching unit 200 and reproduces it through the display unit 140 and/or the speaker SPK. For example, a news program such as "CNN" may be received from the first broadcast channel and reproduced through the display unit 140.

During playback of the first broadcast data, the controller 120 controls the switching unit 200 according to a command signal inputted through the input unit 110 to store in the memory 130 the second broadcast data received from the second broadcast channel through the broadcasting reception module 100. Preferably, the controller 120 activates the second tuner 104 according to the command signal. The activated second tuner 104 then receives the second broadcast data from the second broadcast channel and delivers it to the switching unit 200. The switching unit 200, under the control of the controller 120, delivers the received second broadcast data to the memory 130. The memory 130 then stores the second broadcast data delivered from the switching unit 200.

Accordingly, during playback of the first broadcast data received from the first broadcast channel and displayed on the display unit 140, the second broadcast data, such as a drama "LOST II", which is received during playback of the first broadcast data, can be stored in the memory 130. Preferably, the second broadcast data is stored from a specific point in time, such as the start time of the drama "LOST II". When playback of the first broadcast data received from the first broadcast channel has ended, such as when the second broadcast channel is selected by the user, the controller 120 continues storing the received second broadcast data while simultaneously performing playback of the stored second broadcast data from a specific past time point (period D of Fig. 3).

Preferably, the controller 120 receives a command signal from the user through the input unit 110 to select the second broadcast channel. According to the command signal for selecting the second broadcast channel, the controller 120 decodes the second broadcast data stored in the memory 130 via the A/V decoder 210 and plays it through the display unit 140 and/or the speaker SPK.

Notably, because the second broadcast data stored in the memory 130 is played by passing through the A/V decoder 210, a predetermined amount of time may elapse before the second broadcast data is played back when the controller 120 converts from the first broadcast channel to the second broadcast channel (period C of Fig. 3). Therefore, to minimize the time that elapses when converting from the first broadcast channel to the second broadcast channel, the controller 120 promptly decodes the second broadcast data stored in the memory 130 through the A/V decoder 210 for immediate playback.

Preferably, while previously-stored second broadcast data is played back, second broadcast data newly received through the second tuner 104 may be continuously stored in the memory 130 via the switching unit 200. For example, the drama "LOST II" which is previously stored in the memory 130 may be played back from the start time through the display unit 140. Meanwhile, second broadcast data which is received on a real-time basis through the second tuner 104 may be continuously stored in the memory 130 during playback of the previously-stored data. Accordingly, the user is able to watch the news program "CNN", and still be able to watch the drama "LOST II" broadcasted during the same time in its entirety.

In accordance with the present invention, the specific past time point of when the broadcast data of the second broadcast channel is played back can be set or changed by the user according to various modes. Furthermore, the mode in which the broadcast data of the second broadcast channel stored in the memory 130 is played back from the specific past time point can be varied.

Fig. 2b is a block diagram illustrating a flow of a broadcast signal in a broadcast terminal in accordance with another embodiment of the present invention. As shown in Fig. 2b, the broadcasting reception module 100 differs from that of Fig. 2a.

The broadcast terminal 10 according to Figs. 1 and 2b comprises a broadcasting reception module 100', an input unit 110, a controller 120', a memory 130', a display unit 140, an audio processor 150, a mobile communications module 160, a switching unit 200' and an AudioNideo (A/V) decoder 210'. Hereinafter, a detailed description of elements except the broadcasting reception module 100' will be abbreviated since those are substantially similar to or identical with the elements of the broadcast terminal 10 according to the embodiment of the invention described above with reference to Fig. 1 and Fig. 2a.

As shown in Fig. 2b, the broadcasting reception module 100' receives broadcast signals broadcasted from a broadcasting center according to various types of digital broadcasting standards. Preferably, the broadcasting reception module 100' transmits a received broadcast signal to the controller 120' or other device.

The broadcasting reception module 100' comprises at least a first tuner 102 and a second tuner 104. Preferably, the broadcasting reception module 100' may simultaneously receive two broadcast signals through two different channels using the first tuner 102 and the second tuner 104, respectively. Hereinafter, using the broadcast terminal in accordance with the embodiment of the invention illustrated in Figs. 1 and 3, a method for playing back second broadcast data of the second broadcast channel according to various modes from a specific past time point will be exemplified.

Broadcast Reservation

Fig. 4 illustrates a time relationship between the reception, storage, and playback of broadcast data received through two broadcast channels in a broadcast terminal in accordance to one embodiment of the present invention, wherein a specific program of a second broadcast channel is reserved.

Referring to Figs. 1 and 4, the controller 120 stores reservation content of the second broadcast channel in the memory 130 when a playback period of a specific program of the second broadcast channel is reserved through the input unit 110. Here, the reservation content of the second broadcast channel may include broadcast channel information, a reservation time, broadcast channel program information, and other additional information. Preferably, the broadcast channel program information is provided from the broadcasting center through the broadcasting reception module 100 periodically or non-periodically. Alternatively, the broadcast channel program information may be obtained from an electronic program guide (EPG), which may be downloaded from the wireless Internet using the mobile communications module 160.

In accordance with the present invention, if first broadcast data of the first broadcast channel is played back during the reservation time of the specific program of the second broadcast channel, the controller 120 controls the switching unit 200 as of the reservation time to store the second broadcast data received through the broadcasting reception module 100 in the memory 130 (period B of Fig. 4). For example, if the first broadcast data received from the first broadcast channel is played back during a time when a specific program (for example, "HOUSE") received from the second broadcast channel is reserved, the controller 120 stores "HOUSE" as of the reserved time in the memory 130 while continuing playback of the first broadcast data.

As explained above, when playback of the first broadcast data has ended and conversion from the first broadcast channel to the second broadcast channel takes place, the controller 120 continues storing the received second broadcast data and plays back the stored second broadcast data as of the beginning of the reservation time (period C of Fig. 4). Accordingly, although the user watches a specific program of the first broadcast channel during the reservation time of "HOUSE" of the second broadcast channel, the user can watch "HOUSE" in its entirety and not from a middle portion of the program. Moreover, the user can immediately watch "HOUSE" after playback of the first broadcast data has ended without having to first record "HOUSE" from its beginning to end.

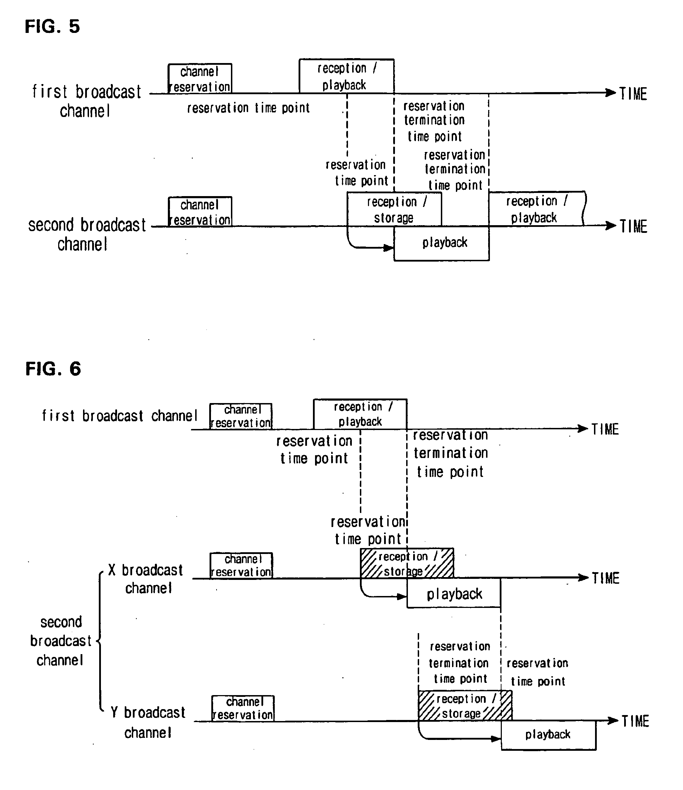

Fig. 5 illustrates a time relationship between the reception, storage, and playback of broadcast data received through two broadcast channels in a broadcast terminal in accordance with another embodiment of the present invention, wherein specific programs of a first and second broadcast channel are reserved, respectively.

Referring to Figs. 1-3 and 5, the controller 120 stores reservation content of the first and second broadcast channels in the memory 130 when a playback period of a specific program of the first and second broadcast channels is respectively reserved through the input unit 110. In accordance with the present invention, the controller 120 initially plays first broadcast data of the first broadcast channel during the reservation time of the specific program of the first broadcast channel. However, it is contemplated that the controller may first play second broadcast data of the second broadcast channel during the reservation time of the specific program of the second broadcast channel.

Accordingly, if the first broadcast data of the first broadcast channel is initially played, but during the reservation time of the specific program of the second broadcast channel, the controller 120 controls the switching unit 200 as of the reservation time to store the second broadcast data received through the broadcasting reception module 100 in the memory 130. At the end of the reservation time of the first broadcast channel, the controller 120 continues storing the automatically received second broadcast data and plays back the stored second broadcast data as of the specific past time point, that is, from the beginning of the reservation time.

In accordance with the present invention, the order in which playback periods are respectively reserved on the first broadcast channel and second broadcast channel can vary. If the respective reservation times of the first and the second broadcast channel overlap, the functions of the broadcast terminal 10 according to the preferred embodiments of the present invention are performed. Preferably, the controller 120 may output information related to the overlap between the respective reservation times of the first and second broadcast channels through the display unit 140 and/or the speaker SPK. For example, the controller 120 may display information indicating the overlap between the respective reservation programs via a pop-up window on the display unit 140. Accordingly, the user may be asked whether to continue with the reservation setting in view of the overlap.

Fig. 6 illustrates a time relationship between the reception, storage, and playback of broadcast data received through three broadcast channels in a broadcast terminal in accordance with another embodiment of the present invention, wherein specific programs of the three broadcast channels are reserved, respectively.

Referring to Figs. 1-3 and 6, the controller 120 stores reservation content of the first and second broadcast channels in the memory 130 when a playback period of a specific program of an X broadcast channel and a Y broadcast channel is respectively reserved through the input unit 110. Here, the X broadcast channel and the Y broadcast channel may be included in both the first broadcast channel and the second broadcast channel.

Notably, there is no overlap between reservation times of the X broadcast channel and the Y broadcast channel included in the first broadcast channel and a reservation time of the first broadcast channel. Accordingly, the process illustrated in Fig. 3 may be applied. Moreover, if reservation times of only two channels (X broadcast channel and Y broadcast channel) overlap among the first broadcast channel, then the process illustrated in Fig. 4 may be applied.

However, in a time region where reservation times of all three channels among the first broadcast channel, the X broadcast channel and the Y broadcast channel at least partially overlap, then the process illustrated in Fig. 6 may be applied. Referring to Fig. 6, a part of the reservation time point of the first broadcast channel and the X broadcast channel overlap, while a part of the reservation time point of the X broadcast channel and the Y broadcast channel overlap.

As shown, the controller 120 plays first broadcast data of the first broadcast channel during the reservation time of the specific program of the first broadcast channel. If the first broadcast data is played during the reservation time of the specific program of the X broadcast channel, the controller 120 controls the switching unit 200 as of the reservation time to store X broadcast data received through the broadcasting reception module 100 in the memory 130.

Accordingly, if the reservation time point of the specific program of the Y broadcast channel is reached before the first broadcast channel is converted to the X broadcast channel, the controller 120 continues storing the received X broadcast data while also storing Y broadcast data received from the Y broadcast channel in the memory 130. Hence, the broadcast terminal 10 receives three sets of broadcast data received from the first, X, and Y broadcast channels, respectively. Therefore, the broadcasting reception module 100 requires at least three tuners. Moreover, the broadcast terminal 10 has the data structure, type, or number of the memory that can simultaneously store two sets of broadcast data received from the X and Y broadcast channels. For example, one memory 130 can be partitioned into two or more storage compartments to respectively store data from two or more broadcast channels.

At the end of the reservation time of the first broadcast channel, the controller 120 continues storing the automatically received X broadcast data and plays back the stored X broadcast data as of the specific past time point, that is, from the beginning of the reservation time of the X broadcast channel. During this time, the controller 120 continues storing the broadcast data received from Y broadcast channel.

At the end of the reservation time of the X broadcast channel, the controller 120 continues storing the automatically received Y broadcast data and plays back the stored Y broadcast data from the specific past time point, that is, from the beginning of the reservation time of the Y broadcast channel. As a result, in spite of three program playback periods on three broadcast channels being at least partially overlapped, all programs reserved using the broadcast terminal 10 can be watched in their entirety.

Playback Mode of Broadcast Data

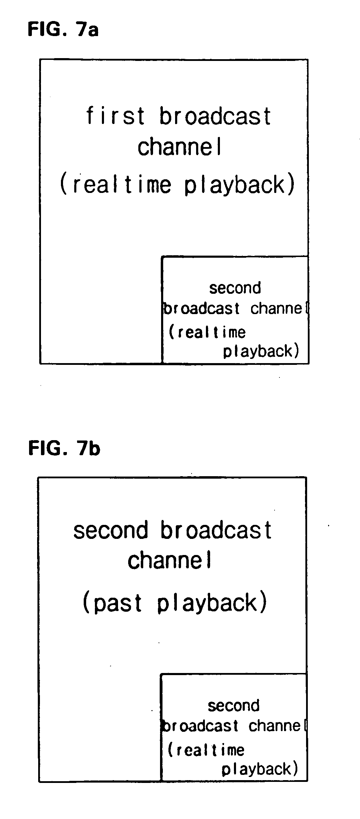

Figs. 7a to 7e illustrate display screens in which broadcast data of a first broadcast channel and a second broadcast channel are played back in accordance with one embodiment of the present invention. Referring to Fig. 7a, the controller 120 may control playback of the first broadcast data such that the first broadcast data is outputted on a definite region or distinguished region of the display unit 140.

For example, as described above with reference to Figs. 4 to 6, when a reservation time of the second broadcast channel is reached during playback of the first broadcast data received from the first broadcast channel, the second broadcast data received from the second broadcast channel can be stored in the memory 130. Here, the first broadcast data may be indicated on the display unit 140 through the process illustrated above. If a user wishes to play back the first broadcast data on a portion of the display unit 140 from a specific past time point, that is, from a reservation time, if necessary, while regenerating the second broadcast data into a part of a screen from the reservation time on a real-time basis, the first broadcast data and the second broadcast data can be displayed on the same screen at the same time. Preferably, the magnitude of the playback region or the region of the first broadcast channel and the second broadcast channel can be variously controlled.

Furthermore, regardless of the reservation, the controller 120 can discontinue playback of one broadcast data when two broadcast data received from two broadcast channels are played back on the same screen at the same time. Accordingly, the broadcast data can be stored from the point of discontinued playback.

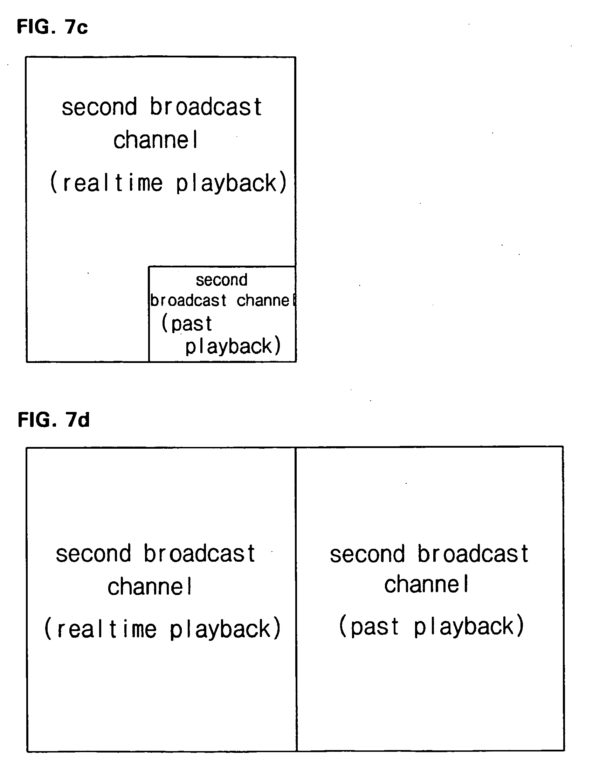

Accordingly, the user can perform storage of various other channels and playback from the specific past time point. Referring to Figs. 7b and 7c, the controller 120 may control playback of the second broadcast data received from the second broadcast channel such that the second broadcast data is played back in a definite region or distinguished region on a real-time basis during playback of the stored second broadcast data (past playback) on the display unit 140. Preferably, the controller 120 may control the region size of the past playback and the real-time playback of the second broadcast data to be a small screen and a large screen. For example, in case the user wishes to repeatedly watch a previous goal scene of soccer game, past playback can be performed along with real-time playback.

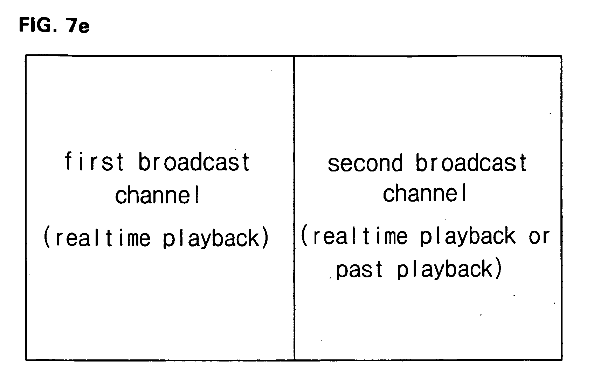

Referring to Fig. 7d, if the display unit 140 can display an image with a screen where the width is longer than the length, the controller 120 may play back the second broadcast data received from the second broadcast channel on a real-time basis along with the past playback content on the display unit 140. Referring to Fig. 7e, the controller 120 may play back first broadcast data received from the first broadcast channel on a real-time basis simultaneously with second broadcast data received from the second broadcast channel on a real-time basis. Alternatively, the real-time first broadcast data may be simultaneously displayed with stored second broadcast data (past playback). Moreover, although it is not exemplified in detail, various playback methods of the broadcast data according to various combinations of Figs. 7a to 7e are contemplated.

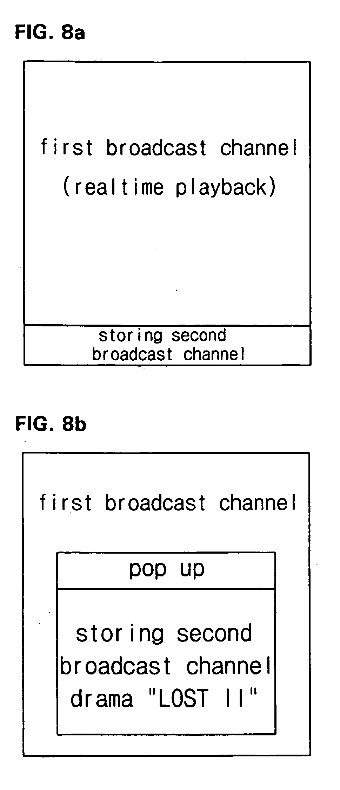

Figs. 8a and 8b illustrate display screens which indicate the storage of second broadcast channel data during playback of first broadcast channel data in accordance with one embodiment of the present invention. Referring to Fig. 8a, during playback of the first broadcast data, the controller 120 displays at least one of the second broadcast data storage of the second broadcast channel or the program information on a part of the region where the first broadcast data of the first broadcast channel is played back or on a distinguished region.

Referring to Fig. 8b, the controller 120 displays at least one of the second broadcast data storage of the second broadcast channel or the program information via a pop-up window. Accordingly, a user visibly knows that the second broadcast data is being stored in the broadcast terminal 10. Thus, the user can comfortably watch playback of the first broadcast data. Moreover, although not illustrated in the drawing, a controller may preferably store the second broadcast data of the second broadcast channel in the memory 130 from a specific time, such as half an hour from the end of the first broadcast data transmission on the first broadcast channel. Accordingly, the second broadcast data can be played back from the specific storage time point when the second broadcast channel is selected.

Preferably, the controller 120 may repeatedly reserve broadcast data playback periods of the first and second broadcast channels with a uniform period. For example, the controller 120 can periodically reserve and play back, on a weekly basis and at a specific time from Monday to Friday, the overlapped portion of two broadcast data received from two broadcast channels, respectively. Preferably, the period may be set by day, week, month, and year, or any combination thereof, for example. Accordingly, playback periods of broadcast programs that start at a specific time before the end of a specific program can periodically be reserved so that a user can watch the programs in their entirety.

In accordance with the present invention, the controller 120, being combined with the method or the process described above, can control the speed of playback from the past time point according to various modes. Furthermore, the controller 120 may delete from the memory 130 content already played back to effectively utilize storage space.

Also, before playback of the second broadcast data, the controller 120 queries the user whether the second broadcast data of the second broadcast channel is played back from the past time point or on a real-time basis. If the former is selected, the second broadcast data of the second broadcast channel is played back from the past time point.

Broadcast Data Playback Method

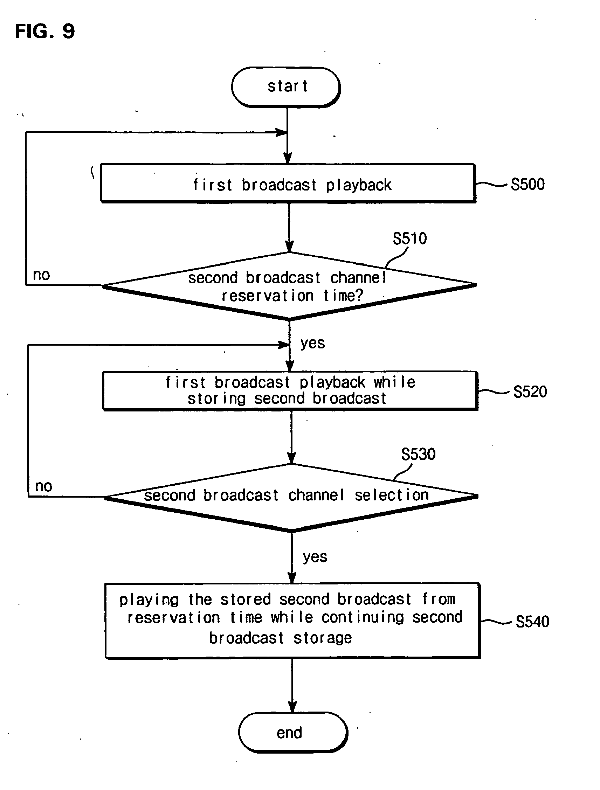

Fig. 9 is a flowchart of a broadcast data playback method of a broadcast terminal in accordance with one embodiment of the present invention. Referring to Figs. 4 and 9, a broadcast data playback method will be described in detail.

First, the first broadcast data received from the first broadcast channel is played back [S500, period A of Fig. 4]. For example, a user may watch a program through the first broadcast channel. A reservation time of the second broadcast channel is then determined during playback of the received first broadcast data [S510]. For example, a user reserves a specific program through the second broadcast channel. Accordingly, when the reservation time of the specific program is reached during playback of the first broadcast data through the first broadcast channel, playback of the specific program through the second broadcast channel will begin. Here, the detailed description on the first broadcast channel and the second broadcast channel is as described above.

In accordance with the present invention, if the reservation time of the second broadcast channel is determined, the first broadcast data is received from the first broadcast channel and played back. During this time, the second broadcast data received from the second broadcast channel may be stored [S520, period B of Fig. 4].

Furthermore, during playback of the received first broadcast data, it is determined whether the second broadcast channel is to be selected [S530, period B of Fig. 4]. For example, a command signal for selecting the second broadcast channel may be received from a user. That is, the user previously watching a broadcast through the first broadcast channel indicates that he wishes to watch a broadcast through the second broadcast channel. Notably, in accordance with the present invention, determining whether the second broadcast channel is to be selected is not strictly dependent on a user command signal.

If is determined that the second broadcast channel is to be selected, then while continuing the storage of the received second broadcast data, the previously stored second broadcast data is played back as of a past time point or the beginning of the reservation time [S540, period C of Fig. 4]. Afterward, the played second broadcast data may be deleted. Thus, memory capacity is saved and effectively utilized.

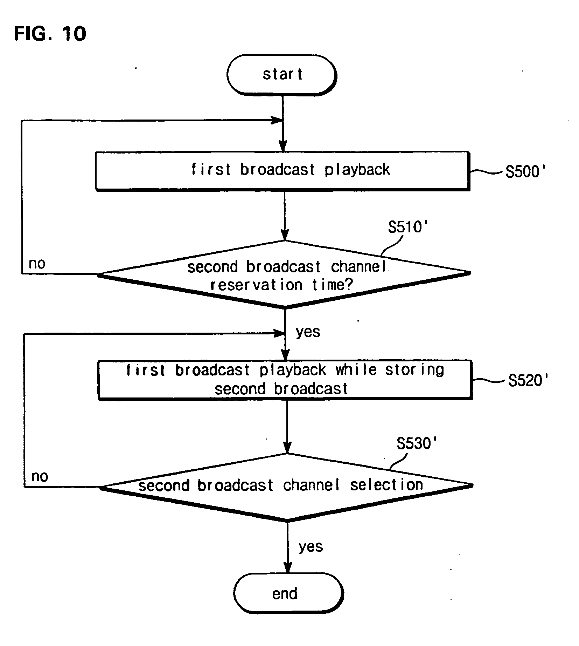

Fig. 10 is a flowchart of a broadcast data playback method of a broadcast terminal in accordance with another embodiment of the present invention. Referring to Fig. 10, steps S500', S510', S520', S530' of the broadcast data playback method are substantially the same as steps S500, S510, S520, S530, respectively, of the broadcast data playback method of Fig. 9. Therefore, their detailed description will be omitted.

Here, the function of storing the second broadcast data during the reservation time may terminate or end. Thus, when the second broadcast channel is determined to be selected (S530'), the stored second broadcast data may be played back from the past time point or the beginning of the reservation time.

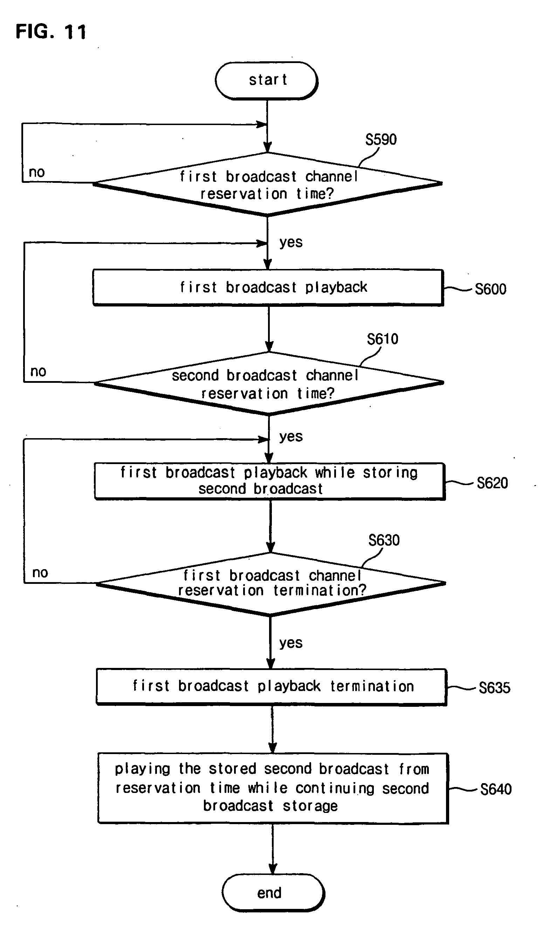

Fig. 11 is a flowchart of a broadcast data playback method of a broadcast terminal in accordance with a further embodiment of the present invention. Referring to Figs. 5 and 11, the broadcast data playback method will be described in detail.

First, it is determined whether a first broadcast channel reservation time exists [S590]. If the first broadcast channel reservation time is determined to exist, then first broadcast data received from the first broadcast channel is played [S600]. For example, the user may watch a broadcast program through the first broadcast channel.

During playback of the received first broadcast data, it is determined whether a second broadcast channel reservation time exists [S610]. If the second broadcast channel reservation time is determined to exist, the first broadcast data continues to be received from the first broadcast channel and played. At the same time, second broadcast data received from the second broadcast channel is stored [S620, period B of Fig. 5].

Additionally, during playback of the received first broadcast data, it is determined whether a first broadcast channel reservation time period has ended or terminated [S630]. If it is determined that the first broadcast channel reservation time has ended or terminated, then the playback of the first broadcast data is ended or terminated [S635]. Thereafter, the previously stored second broadcast data is played while continuing to store newly received second broadcast data [S640, period C of Fig. 5]. Afterward, the played second broadcast data may be deleted.

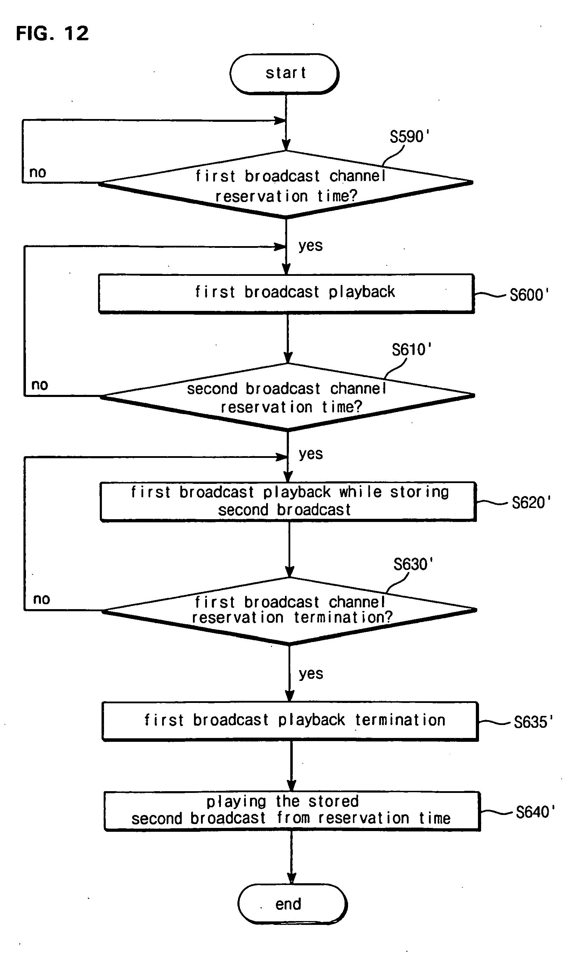

Fig. 12 is a flowchart of a broadcast data playback method of a broadcast terminal in accordance with another embodiment of the present invention. Referring to Fig. 12, steps S590', S600', S610', S620', S530' and S635' of the broadcast data playback method are substantially the same as the steps S590, S600, S610, S620, S630 and S635, respectively, of Fig. 11. Therefore, their detailed description will be omitted.

Accordingly, after playback of the first broadcast data is terminated, and if the second broadcast channel reservation time has ended or terminated, then any stored second broadcast data is played back from a past time point or the beginning of the reservation time [S640']. Consequently, the step S640' is different from the step S640 of Fig. 11 in that the second broadcast data received through the second broadcast channel is no longer continuously stored because the second broadcast channel reservation time is presently terminated.

The embodiments of the invention were illustrated as described; however, they are not limited to those scopes. In the embodiments described above, various broadcast channel conversion modes according to a selection command inputted through the input unit or by the broadcast reservation was illustrated. However, the broadcast channel conversion mode of the present invention is not limited thereto. For example, after storing the second broadcast data according to a user command during the playback of the first broadcast data, second broadcast data stored from a next storage time point or from a specific time point after the storage time point can be played. In another example, with regard to generating specific channel broadcast data, when the generation of the specific channel broadcast data is terminated after a store command is inputted for another channel, the specific channel broadcast data may be generated again from the storing point of the other channel's broadcast data.

Furthermore, in the embodiments described above, the mode in which the first and the second broadcast data are simultaneously played on a main screen and a sub-screen, respectively, in a real-time or non-real-time basis was exemplified; however, the invention is not restricted thereto. For example, three different sets of broadcast data may be played on the same screen according to various combinations in a real-time or non-real-time basis.

The foregoing embodiments and advantages are merely exemplary and are not to be construed as limiting the present invention. The present teaching can be readily applied to other types of apparatuses. The description of the present invention is intended to be illustrative, and not to limit the scope of the claims. Many alternatives, modifications, and variations will be apparent to those skilled in the art. In the claims, means-plus-function clauses are intended to cover the structure described herein as performing the recited function and not only structural equivalents but also equivalent structures.

## Claims

1. A method for playback of broadcast data in a receiver, the method comprising:
setting a reservation spanning a duration for receiving over a desired broadcast channel;
receiving first data through a first broadcast channel at the receiver, wherein the first broadcast channel is distinct from the desired broadcast channel;
performing playback (S500) of the first data, wherein a playback time duration of the first data overlaps with the reservation;
receiving second data through the desired broadcast channel at the receiver according to the reservation;
determining that the playback time duration of the first data overlaps with the reservation (S510); **characterized by**
storing received second data (S520) from the beginning of the reservation; and
performing playback of the stored second data after playback of at least part of the first data while continuing to store received second data according to the duration of the reservation (S540) and deleting the played second data after performing playback,
wherein playback of the stored second data is automatically performed when playback of the first data ends.

2. The method of claim 1, wherein the receiver is a mobile terminal.

3. The method of claim 1, wherein a playback speed of the stored second data is different from an original playback speed of the second data.

4. The method of claim 1, wherein the received second data is stored until a playback length of the stored second data matches a continuous playback length of the received second data.

5. The method of claim 1, further comprising performing playback of the received second data after playback of the stored second data.

6. The method of claim 1, wherein playback of the stored second data is performed upon a user command.

7. The method of claim 1, wherein playback of the stored second data is performed from the beginning of the stored second data.

8. The method of claim 1, further comprising:
setting a reservation to receive the first data; and
receiving and performing playback of the first data upon the reservation.

9. The method of claim 1, further comprising providing notice of the received second data being stored.

10. The method of claim 1, further comprising receiving an electronic programming guide (EPG).

11. The method of claim 1, further comprising storing the received second data periodically.

12. A mobile terminal for playback of broadcast data, the mobile terminal comprising:
a receiver (100) for receiving first data through a first broadcast channel and
receiving second broadcast data through a second broadcast channel; and
a controller (120) configured for:
setting a reservation spanning a duration for receiving second data through a second broadcast channel,
performing playback of the received first data, wherein a playback time duration of the first data overlaps with the reservation,
determining that the playback time duration of the first data overlaps with the reservation, **characterized by**
storing received second data from the beginning of the reservation, and
performing playback of the stored second data after playback of at least part of the first data while continuing to receive and store second data according to the duration of the reservation and deleting the played second data after performing playback,
wherein playback of the stored second data is automatically performed when playback of the first data ends.

13. The mobile terminal of claim 12, wherein a playback speed of the stored second data is different from an original playback speed of the second data.

14. The mobile terminal of claim 12, wherein the received second data is stored until a playback length of the stored second data matches a continuous playback length of the received second data.

15. The mobile terminal of claim 12, wherein the controller performs playback of the received second data after playback of the stored second data.

16. The mobile terminal of claim 12, wherein playback of the stored second data is performed upon a user command.

17. The mobile terminal of claim 12, wherein playback of the stored second data is performed from the beginning of the stored second data.

18. The mobile terminal of claim 12, wherein:
the controller sets a reservation to receive the first data;
the receiver receives the first data upon the reservation; and
the controller performs playback of the first data upon the reservation.

19. The mobile terminal of claim 12, wherein the controller provides notice of the received second data being stored.

20. The mobile terminal of claim 12, wherein the controller receives an electronic programming guide (EPG).

21. The mobile terminal of claim 12, wherein the controller stores the received second data periodically.

22. The mobile terminal of claim 12, wherein the receiver comprises at least one of a multiple-tuner and a plurality of single-tuners.

## Patentansprüche

1. Verfahren zur Wiedergabe von Rundfunkdaten für einen Empfänger, wobei das Verfahren die folgenden Schritte aufweist:
Einstellen einer sich über eine Dauer erstreckende Reservierung zum Empfang über einen gewünschten Rundfunkkanal;
Empfangen erster Daten über einen ersten Rundfunkkanal im Empfänger, wobei sich der erste Rundfunkkanal vom gewünschten Rundfunkkanal unterscheidet;
Durchführen einer Wiedergabe (S500) der ersten Daten, wobei die Dauer der Wiedergabezeit der ersten Daten mit der Reservierung überlappt;
Empfangen von zweiten Daten über den gewünschten Rundfunkkanal im Empfänger gemäß der Reservierung;
Bestimmen, dass die Dauer der Wiedergabezeit der ersten Daten die Reservierung (S510) überlappt; **gekennzeichnet durch**
Speichern der empfangenen zweiten Daten (S520) ab dem Beginn der Reservierung; und
Durchführen der Wiedergabe der gespeicherten zweiten Daten nach der Wiedergabe von wenigstens einem Teil der ersten Daten, während die empfangenen zweiten Daten gemäß der Dauer der Reservierung (S540) weiterhin gespeichert werden, und Löschen der wiedergegebenen zweiten Daten nach Durchführen der Wiedergabe,
wobei die Wiedergabe der gespeicherten zweiten Daten automatisch durchgeführt wird, wenn die Wiedergabe der ersten Daten endet.

2. Verfahren nach Anspruch 1, wobei der Empfänger ein mobiles Endgerät ist.

3. Verfahren nach Anspruch 1, wobei eine Wiedergabegeschwindigkeit der gespeicherten zweiten Daten sich von einer ursprünglichen Wiedergabegeschwindigkeit der zweiten Daten unterscheidet.

4. Verfahren nach Anspruch 1, wobei die empfangenen zweiten Daten gespeichert werden, bis eine Wiedergabelänge der gespeicherten zweiten Daten einer fortlaufenden Wiedergabelänge der empfangenen zweiten Daten entspricht.

5. Verfahren nach Anspruch 1, das weiterhin das Durchführen der Wiedergabe der empfangenen zweiten Daten nach der Wiedergabe der gespeicherten zweiten Daten beinhaltet.

6. Verfahren nach Anspruch 1, wobei die Wiedergabe der gespeicherten zweiten Daten auf einen Benutzerbefehl hin durchgeführt wird.

7. Verfahren nach Anspruch 1, wobei die Wiedergabe der gespeicherten zweiten Daten ab dem Beginn der gespeicherten zweiten Daten durchgeführt wird.

8. Verfahren nach Anspruch 1, das weiterhin beinhaltet:
Einstellen einer Reservierung, um die ersten Daten zu empfangen; und
Empfangen und Durchführen der Wiedergabe der ersten Daten auf die Reservierung hin.

9. Verfahren nach Anspruch 1, das weiterhin die Bereitstellung eines Hinweises beinhaltet, dass die empfangenen zweiten Daten gespeichert werden.

10. Verfahren nach Anspruch 1, das weiterhin das Empfangen eines elektronischen Programmführers (Electronic Programming Guide, EPG) beinhaltet.

11. Verfahren nach Anspruch 1, das weiterhin das Speichern der empfangenen zweiten Daten in periodischen Abständen beinhaltet.

12. Mobiles Endgerät zur Wiedergabe von Rundfunkdaten, wobei das mobile Endgerät aufweist:
einen Empfänger (100) zum Empfangen erster Daten über einen ersten Rundfunkkanal und zum Empfangen zweiter Rundfunkdaten über einen zweiten Rundfunkkanal; und
einen Controller (120), der ausgebildet ist zum:
Einstellen einer sich über eine Dauer erstreckenden Reservierung zum Empfang zweiter Daten über einen zweiten Rundfunkkanal,
Durchführen einer Wiedergabe der ersten empfangenen Daten, wobei die Dauer der Wiedergabezeit der ersten Daten mit der Reservierung überlappt,
Bestimmen, dass die Dauer der Wiedergabezeit der ersten Daten mit der Reservierung überlappt, **gekennzeichnet durch**
Speichern der empfangenen zweiten Daten ab dem Beginn der Reservierung, und
Durchführen der Wiedergabe der gespeicherten zweiten Daten nach Wiedergabe von wenigstens einem Teil der ersten Daten, während fortlaufend zweiten Daten gemäß der Dauer der Reservierung empfangen und gespeichert werden, und Löschen der wiedergegebenen zweiten Daten nach Durchführen der Wiedergabe, wobei die Wiedergabe der gespeicherten zweiten Daten automatisch durchgeführt wird, wenn die Wiedergabe der ersten Daten endet.

13. Mobiles Endgerät nach Anspruch 12, wobei die Wiedergabegeschwindigkeit der gespeicherten zweiten Daten sich von einer ursprünglichen Wiedergabegeschwindigkeit der zweiten Daten unterscheidet.

14. Mobiles Endgerät nach Anspruch 12, wobei die empfangenen zweiten Daten gespeichert werden, bis eine Wiedergabelänge der gespeicherten zweiten Daten einer fortlaufenden Wiedergabelänge der empfangenen zweiten Daten entspricht.

15. Mobiles Endgerät nach Anspruch 12, wobei der Controller die Wiedergabe der empfangenen zweiten Daten nach der Wiedergabe der gespeicherten zweiten Daten durchführt.

16. Mobiles Endgerät nach Anspruch 12, wobei die Wiedergabe der gespeicherten zweiten Daten auf einen Benutzerbefehl hin ausgeführt wird.

17. Mobiles Endgerät nach Anspruch 12, wobei die Wiedergabe der gespeicherten zweiten Daten ab dem Beginn der gespeicherten zweiten Daten durchgeführt wird.

18. Mobiles Endgerät nach Anspruch 12, wobei:
der Controller eine Reservierung zum Empfang der ersten Daten einstellt;
der Empfänger die ersten Daten auf die Reservierung hin empfängt; und
der Controller die Wiedergabe der ersten Daten auf die Reservierung hin durchführt.

19. Mobiles Endgerät nach Anspruch 12, wobei der Controller einen Hinweis bereitstellt, dass die empfangenen zweiten Daten gespeichert werden.

20. Mobiles Endgerät nach Anspruch 12, wobei der Controller einen elektronischen Programmführer (EPG) empfängt.

21. Mobiles Endgerät nach Anspruch 12, wobei der Controller die empfangenen zweiten Daten in periodischen Abständen speichert.

22. Mobiles Endgerät nach Anspruch 12, wobei der Empfänger einen Mehrfachtuner und/oder eine Vielzahl von Einzeltunern aufweist.

## Revendications

1. Procédé de lecture de données de diffusion dans un récepteur, le procédé comprenant les étapes consistant à :
établir une réservation couvrant une durée de réception sur un canal de diffusion souhaité ;
recevoir des premières données par l'intermédiaire d'un premier canal de diffusion au niveau du récepteur, dans lequel le premier canal de diffusion est distinct du canal de diffusion souhaité ;
exécuter une lecture (S500) des premières données, dans lequel une durée du temps de lecture des premières données chevauche la réservation ;
recevoir des deuxièmes donnés par l'intermédiaire du canal de diffusion souhaité au niveau du récepteur conformément à la réservation ;
déterminer que la durée de temps de lecture des premières données chevauche la réservation (S510) ; **caractérisé par** les étapes consistant à
mémoriser les deuxièmes données reçues (S520) à partir du début de la réservation ; et
exécuter une lecture des deuxièmes données mémorisées après la lecture d'au moins une partie des premières données tout en continuant à mémoriser les deuxièmes données reçues conformément à la durée de la réservation (S540) et effacer les deuxièmes données lues après l'exécution de la lecture,
dans lequel la lecture des deuxièmes données mémorisées est automatiquement exécutée lorsque la lecture des premières données se termine.

2. Procédé selon la revendication 1, dans lequel le récepteur est un terminal mobile.

3. Procédé selon la revendication 1, dans lequel une vitesse de lecture des deuxièmes données mémorisées est différente d'une vitesse de lecture d'origine des deuxièmes données.

4. Procédé selon la revendication 1, dans lequel les deuxièmes données reçues sont mémorisées jusqu'à ce qu'une longueur de lecture des deuxièmes données mémorisées corresponde avec une longueur de lecture continue des deuxièmes données reçues.

5. Procédé selon la revendication 1, comprenant en outre l'étape consistant à exécuter une lecture des deuxièmes données reçues après la lecture des deuxièmes données mémorisées.

6. Procédé selon la revendication 1, dans lequel une lecture des deuxièmes données mémorisées est exécutée sur une commande d'utilisateur.

7. Procédé selon la revendication 1, dans lequel une lecture des deuxièmes données mémorisées est exécutée à partir du début des deuxièmes données mémorisées.

8. Procédé selon la revendication 1, comprenant en outre les étapes consistant à :
établir une réservation pour recevoir les premières données ; et
recevoir et exécuter la lecture des premières données sur réservation.

9. Procédé selon la revendication 1, comprenant en outre l'étape consistant à notifier que les deuxièmes données reçues sont mémorisées.

10. Procédé selon la revendication 1, comprenant en outre l'étape consistant à recevoir un guide de programmation électronique (EPG).

11. Procédé selon la revendication 1, comprenant en outre l'étape consistant à mémoriser les deuxièmes données reçues périodiquement.

12. Terminal mobile pour lecture de données de diffusion, le terminal mobile comprenant :
un récepteur (100) destiné à recevoir des premières données par l'intermédiaire d'un premier canal de diffusion et à recevoir des deuxièmes données de diffusion par l'intermédiaire d'un deuxième canal de diffusion ; et
un contrôleur (120) configuré pour :
établir une réservation couvrant une durée destinée à recevoir des deuxièmes données par l'intermédiaire d'un deuxième canal de diffusion,
exécuter une lecture des premières données reçues, dans lequel une durée du temps de lecture des premières données chevauche la réservation,
déterminer que la durée du temps de lecture des premières données chevauche la réservation, **caractérisé par** les étapes consistant à
mémoriser les deuxièmes données reçues à partir du début de la réservation, et
exécuter une lecture des deuxièmes données mémorisées après une lecture d'au moins une partie des premières données tout en continuant à recevoir et à mémoriser les deuxièmes données conformément à la durée de la réservation et effacer les deuxièmes données lues après l'exécution de la lecture,
dans lequel la lecture des deuxièmes données est automatiquement exécutée lorsque la lecture des premières données se termine.

13. Terminal mobile selon la revendication 12, dans lequel une vitesse de lecture des deuxièmes données mémorisées est différente d'une vitesse de lecture d'origine des deuxièmes données.

14. Terminal mobile selon la revendication 12, dans lequel les deuxièmes données reçues sont mémorisées jusqu'à ce qu'une longueur de lecture des deuxièmes données mémorisées corresponde avec une longueur de lecture continue des deuxièmes données reçues.

15. Terminal mobile selon la revendication 12, dans lequel le contrôleur exécute une lecture des deuxièmes données reçues après la lecture des deuxièmes données mémorisées.

16. Terminal mobile selon la revendication 12, dans lequel une lecture des deuxièmes données mémorisées est exécutée sur une commande d'utilisateur.

17. Terminal mobile selon la revendication 12, dans lequel une lecture des deuxièmes données mémorisées est exécutée à partir du début des deuxièmes données mémorisées.

18. Terminal mobile selon la revendication 12, dans lequel :
le contrôleur établit une réservation pour recevoir les premières données ;
le récepteur reçoit les premières données sur la réservation ; et
le contrôleur exécute une lecture des premières données sur la réservation.

19. Terminal mobile selon la revendication 12, dans lequel le contrôleur notifie que les deuxièmes données reçues sont mémorisées.

20. Terminal mobile selon la revendication 12, dans lequel le contrôleur reçoit un guide de programmation électronique (EPG).

21. Terminal mobile selon la revendication 12, dans lequel le contrôleur mémorise les deuxièmes données reçues périodiquement.

22. Terminal mobile selon la revendication 12, dans lequel le récepteur comprend au moins un syntonisateur multiple et une pluralité de syntonisateurs simples.
